# EUROPEAN PATENT APPLICATION

(11) **EP 4 825 565 A1**
(43) Date of publication of application: **21.10.2026**
(21) Application number: 25773687.6
(22) Date of filing: 28.02.2025
(51) Int. Cl.: B29C 65/56, B29C 70/20, B29C 70/68, F16B 5/04, F16B 19/06

(54) **FASTENING METHOD AND FASTENING DEVICE**

(30) Priority: 22.03.2024 JP 2024046625
(71) Applicant: KAWASAKI JUKOGYO KABUSHIKI KAISHA, Kobe-shi, Hyogo 650-8670 (JP)
(72) Inventor: KAWASHIMA, Katsuyuki, Kobe-shi, Hyogo (JP); MICHIUE, Masashi, Kobe-shi, Hyogo (JP); NAGAO, Masaki, Kobe-shi, Hyogo (JP); KONDO, Yoshitaka, Kobe-shi, Hyogo (JP)
(74) Representative: Bals & Vogel Patentanwälte PartGmbB
(86) International application number: PCT/JP2025/007255
(87) International publication number: WO 2025/197494

(57) **Abstract**

A fastening method fastens a plurality of workpieces having through-holes. The fastening method includes preparing a fastening target group including the plurality of workpieces stacked on one another to form an interconnected hole, heating a rod containing a reinforcing fiber and a thermoplastic resin outside the fastening target group, and inserting the heated rod into the interconnected hole through a second opening to fasten the plurality of workpieces in the fastening target group to one another. The interconnected hole is defined by the through-holes in the plurality of workpieces connecting with one another in a first direction. The interconnected hole includes a first opening and the second opening opposite to the first opening in the first direction.

## Description

### FIELD OF THE INVENTION

The present disclosure relates to a fastening method and a fastening device for fastening multiple workpieces.

### BACKGROUND

For example, Japanese Patent No. 6840410 describes a technique for fastening multiple workpieces having insertion holes, or for example, a method for fastening workpieces with an intermediate member by preparing the intermediate member formed from a fiber-reinforced resin including a first head and a shaft, and heating and pressing the shaft while inserting the shaft of the intermediate member into insertion holes in the workpieces.

### SUMMARY OF THE INVENTION

The technique described in Japanese Patent No. 6840410 involves heating of the intermediate member in the insertion holes in the workpieces and thus may thermally damage the workpieces. With the intermediate member heated in the insertion holes, a defect may occur between the head and the shaft of the intermediate member. This may cause non-uniform heating of the intermediate member and reduce the fastening strength.

Techniques for fastening multiple workpieces are thus to increase the fastening strength.

### SOLUTION TO PROBLEM

To respond to at least some of the above issues, the present disclosure is implementable, for example, in the aspects described below.

A fastening method according to a first aspect of the present disclosure fastens a plurality of workpieces having through-holes. The fastening method includes preparing a fastening target group including the plurality of workpieces stacked on one another to form an interconnected hole. The interconnected hole is defined by the through-holes in the plurality of workpieces connecting with one another in a first direction. The interconnected hole includes a first opening and a second opening opposite to the first opening in the first direction. The fastening method includes heating a rod containing a reinforcing fiber and a thermoplastic resin outside the fastening target group. The fastening method includes inserting the heated rod into the interconnected hole through the second opening to fasten the plurality of workpieces in the fastening target group to one another.

A fastening device according to a second aspect fastens a plurality of workpieces in a fastening target group to one another. The fastening target group has an interconnected hole extending in a first direction. The fastening device includes a first mold, a holder, a heater, and an insertion jig. The holder is spaced from the first mold and faces the first mold in the first direction. The holder has a holding through-hole extending through the holder in the first direction. The heater heats an inside of the holding through-hole. The insertion jig is insertable in the first direction from the holder toward the first mold.

### BRIEF DESCRIPTION OF THE DRAWINGS

FIG. 1 is a schematic sectional view of a fastening device.
FIG. 2 is an external view of a rod.
FIG. 3 is a sectional view of the rod.
FIG. 4 is a flowchart of a fastening method.
FIG. 5 is a diagram illustrating step S10 in the fastening method.
FIG. 6 is a diagram illustrating step S20 in the fastening method.

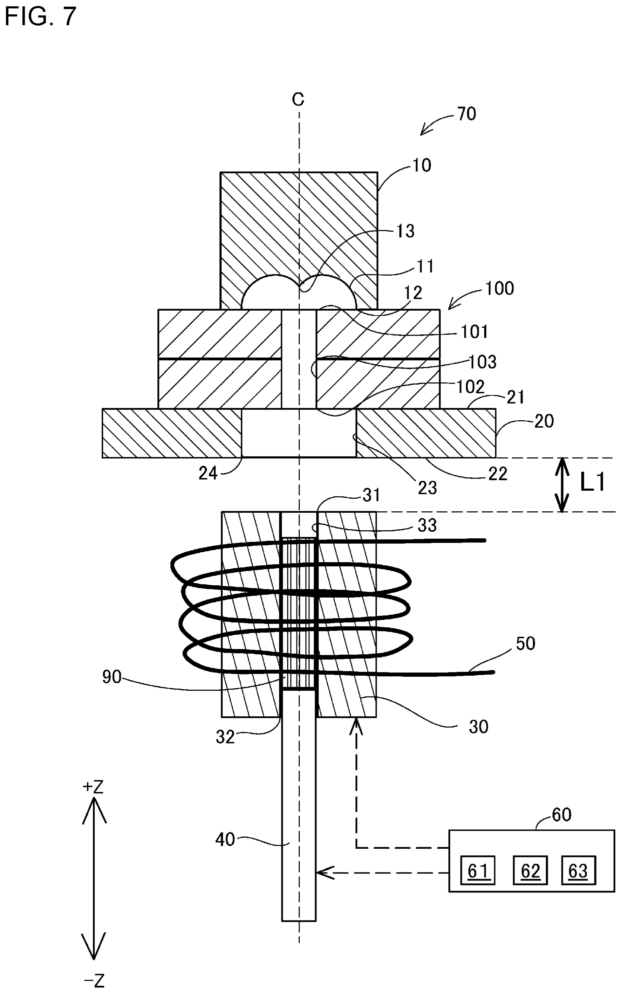

FIG. 7 is a diagram illustrating step S30 in the fastening method, in which the rod is heated at a position away from a fastening target group.
FIG. 8 is a diagram illustrating step S40 in the fastening method.
FIG. 9 is a diagram illustrating step S50 in the fastening method.
FIG. 10 is a schematic sectional view of a fastening structure.
FIG. 11 is a diagram of the fastening structure when viewed in the positive Z-direction.
FIG. 12 is a schematic partial sectional view of a fastening device according to a second embodiment.
FIG. 13 is a diagram of a first mold in the second embodiment when viewed in the negative Z-direction.
FIG. 14 is a schematic sectional view of a fastening structure formed by the fastening device according to the second embodiment.
FIG. 15 is a diagram of the fastening structure in the second embodiment when viewed in the positive Z-direction.
FIG. 16 is a schematic partial sectional view of a fastening device according to a third embodiment.
FIG. 17 is a schematic sectional view of a fastening structure formed by the fastening device according to the third embodiment.
FIG. 18 is a schematic partial sectional view of a fastening device according to a fourth embodiment.
FIG. 19 is a schematic sectional view of a fastening structure formed by the fastening device according to the fourth embodiment.
FIG. 20 is a schematic partial sectional view of a fastening device according to a fifth embodiment.
FIG. 21 is a schematic sectional view of a fastening structure formed by the fastening device according to the fifth embodiment.
FIG. 22 is a schematic partial sectional view of a fastening device according to a sixth embodiment.
FIG. 23 is a schematic sectional view of a fastening structure formed by the fastening device according to the sixth embodiment.
FIG. 24 is a schematic sectional view of a fastening device according to a seventh embodiment.
FIG. 25 is a diagram illustrating step S50 in the seventh embodiment.
FIG. 26 is a schematic sectional view of a fastening structure in the seventh embodiment.
FIG. 27 is a schematic sectional view of a fastening device according to another embodiment.

### DETAILED DESCRIPTION

### First Embodiment

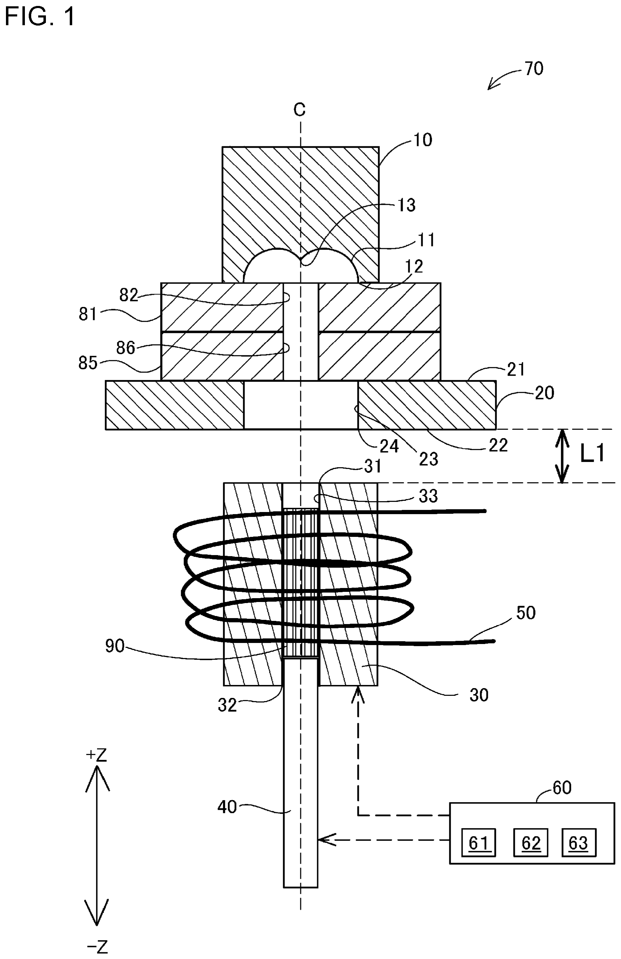

FIG. 1 is a schematic sectional view of a fastening device 70 according to a first embodiment, with workpieces 81 and 85 and a rod 90 placed in the fastening device 70. The fastening device 70 uses the rod 90 containing reinforcing fibers and a thermoplastic resin to fasten the workpieces 81 and 85 having respective through-holes 82 and 86.

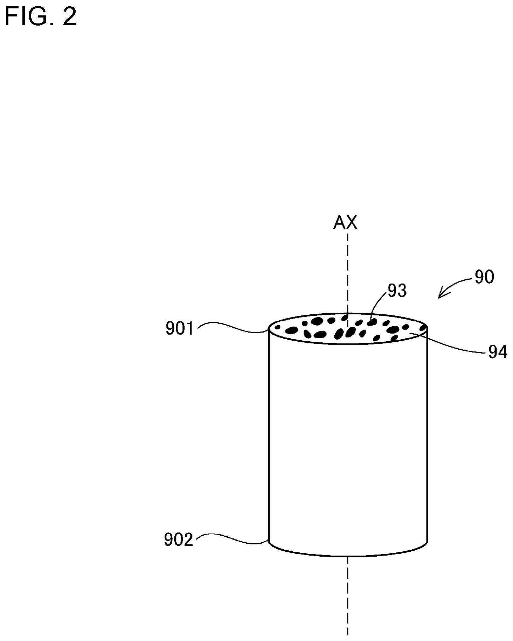

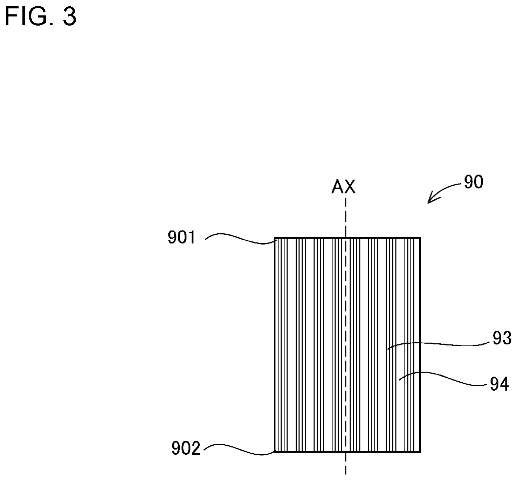

The rod 90 and the multiple workpieces 81 and 85 will be described first. FIG. 2 shows the appearance of the rod 90. In the present embodiment, the rod 90 is cylindrical. FIG. 3 is a longitudinal sectional view of the rod 90 having a central axis AX extending in the longitudinal direction of the rod 90. As shown in FIGs. 2 and 3, the rod 90 is formed from fiber reinforced thermoplastic (FRTP) containing multiple reinforcing fibers 93 and a thermoplastic resin 94. The reinforcing fibers 93 are oriented in a predetermined direction. The reinforcing fibers 93 are continuous fibers. In the present embodiment, the predetermined direction is a direction along the axis AX of the rod 90. The direction along the axis AX is aligned with the axis AX of the rod 90. The reinforcing fibers 93 are continuous in the direction along the axis AX. In the present embodiment, the reinforcing fibers 93 are continuous from one end 901 to the other end 902 of the rod 90. In other words, each reinforcing fiber 93 has a length that is substantially the same as the distance from the end 901 to the other end 902 of the rod 90.

In the present embodiment, the reinforcing fibers 93 contained in the rod 90 are, for example, carbon fibers. Examples of the thermoplastic resin 94 contained in the rod 90 include polyetherketone (PEEK), low-melt polyaryletherketone (LM-PAEK), polyetherketoneketone (PEKK), polyphenylenesulfide (PPS), polyamide (PA), and polypropylene (PP).

The workpieces 81 and 85 are substantially plates. The workpieces 81 and 85 may at least partially include plate portions, and the shape of the workpieces 81 and 85 may be changed as appropriate. The workpieces 81 and 85 respectively have the through-holes 82 and 86 in the thickness directions of the plate portions. In the present embodiment, the through-hole 82 has substantially the same inner diameter as the through-hole 86.

In the present embodiment, each of the workpieces 81 and 85 is formed from a resin material reinforced with fibers, such as carbon fiber reinforced plastics (CFRP) or glass fiber reinforced plastics (GFRP). The resin material is lighter and has higher strength than a metal material, and may be used as a material for components of large structures. For example, the workpieces 81 and 85 are used for fuselage components of an aircraft and space equipment. For example, when the workpieces 81 and 85 formed from CFRP are fastened together using a metal fastener such as a rivet, galvanic corrosion may occur depending on the surrounding environment or the use. In contrast, when the workpieces 81 and 85 formed from CFRP are fastened together with the rod 90 formed from FRTP, galvanic corrosion can be prevented.

The fastening device 70 will be described in detail below. As shown in FIG. 1, the fastening device 70 includes a first mold 10, a second mold 20, a holder 30, an insertion jig 40, and a heater 50. The first mold 10, the second mold 20, and the holder 30 are located in this order in the Z-direction in FIG. 1. In the present embodiment, the first mold 10, the second mold 20, the holder 30, and the insertion jig 40 are formed from a metal material, such as iron or stainless steel. The fastening device 70 may be formed from any material with heat resistance and durability appropriate for the fastening device 70. The Z-direction is an example of a first direction in one or more embodiments of the present disclosure. In the present embodiment, the Z-direction is the vertical direction. The positive Z-direction is the vertically upward direction, and the negative Z-direction is the vertically downward direction.

The first mold 10 is spaced from the second mold 20. The first mold 10 is located in the positive Z-direction from the second mold 20. The first mold 10 shapes an end portion of the rod 90 in the positive Z-direction with the rod 90 fastening the workpieces 81 and 85. The rod fastening multiple workpieces is hereafter also referred to as the rod in a fastening state. The end portion of the rod 90 in the fastening state in the positive Z-direction is also referred to as a first end portion. In the present embodiment, the first mold 10 has an opening 12 in the negative Z-direction and a recess 11 recessed in the positive Z-direction. The first mold 10 includes a protrusion 13 protruding in the negative Z-direction at the center of the recess 11.

The second mold 20 is located between the first mold 10 and the holder 30 in the Z-direction. The second mold 20 has a through-hole 23 extending in the Z-direction. The through-hole 23 is an example of a molding through-hole in one or more embodiments of the present disclosure. In the present embodiment, the through-hole 23 has a larger inner diameter than the through-holes 82 and 86 of the workpieces 81 and 85. The second mold 20 has an opening 24 of the through-hole 23 in the negative Z-direction that is covered by the holder 30 and the insertion jig 40. This structure causes the second mold 20 to shape an end portion of the rod 90 in the fastening state in the negative Z-direction. The end portion of the rod 90 in the fastening state in the negative Z-direction is also referred to as a second end portion.

The holder 30 is a jig that temporarily holds the rod 90. The holder 30 has a holding through-hole 33. The holding through-hole 33 has an opening 31 in the positive Z-direction and an opening 32 in the negative Z-direction. In the present embodiment, the holding through-hole 33 is substantially cylindrical. The holding through-hole 33 has an inner diameter larger than the outer diameter of the rod 90.

The insertion jig 40 is insertable into the holding through-hole 33. In the present embodiment, the insertion jig 40 is substantially cylindrical. The insertion jig 40 has an outer diameter smaller than the inner diameter of the holding through-hole 33. The insertion jig 40 is longer than the holding through-hole 33 in the Z-direction.

The heater 50 heats the rod 90 in the holding through-hole 33. In the present embodiment, the heater 50 heats the inside of the holding through-hole 33 through the holder 30. The heater 50 is, for example, an electric heater that heats the holder 30 in response to a switch (not shown) being turned on. In the present embodiment, the heater 50 is a cartridge heater. The heater 50 may be integral with the holder 30 or separate from the holder 30. The heater 50 heats the inside of the holding through-hole 33 from the opening 31 in the positive Z-direction to the opening 32 in the negative Z-direction in the holder 30. In other words, the heater 50 heats the entire rod 90 placed in the holding through-hole 33.

The fastening device 70 further includes a controller 60. The controller 60 adjusts a distance L1 between the holder 30 and the second mold 20 in the Z-direction. In the present embodiment, the controller 60 includes a first actuator 61, a second actuator 62, and a control circuit 63. The first actuator 61 moves the holder 30 in the Z-direction. The second actuator 62 moves the insertion jig 40 in the Z-direction. The control circuit 63 drives the first actuator 61 and the second actuator 62 in response to input operations performed by an operator. For example, the control circuit 63 transmits a signal to the first actuator 61 to adjust the distance L1 to an intended distance. The control circuit 63 transmits a signal to the second actuator 62 to move the insertion jig 40 in the positive Z-direction. The fastening device 70 may not include the controller 60, and the operator may manually adjust the distance L1 or move the insertion jig 40 in the positive Z-direction.

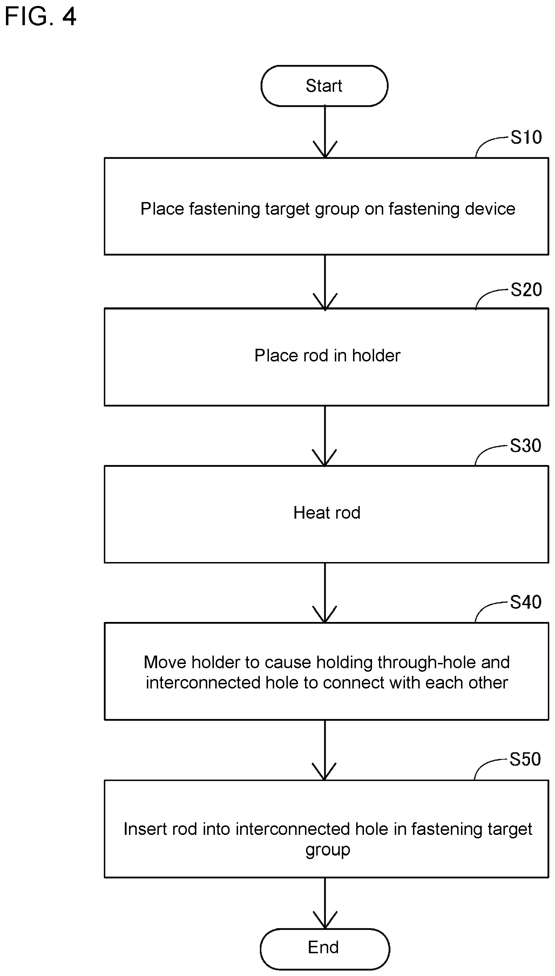

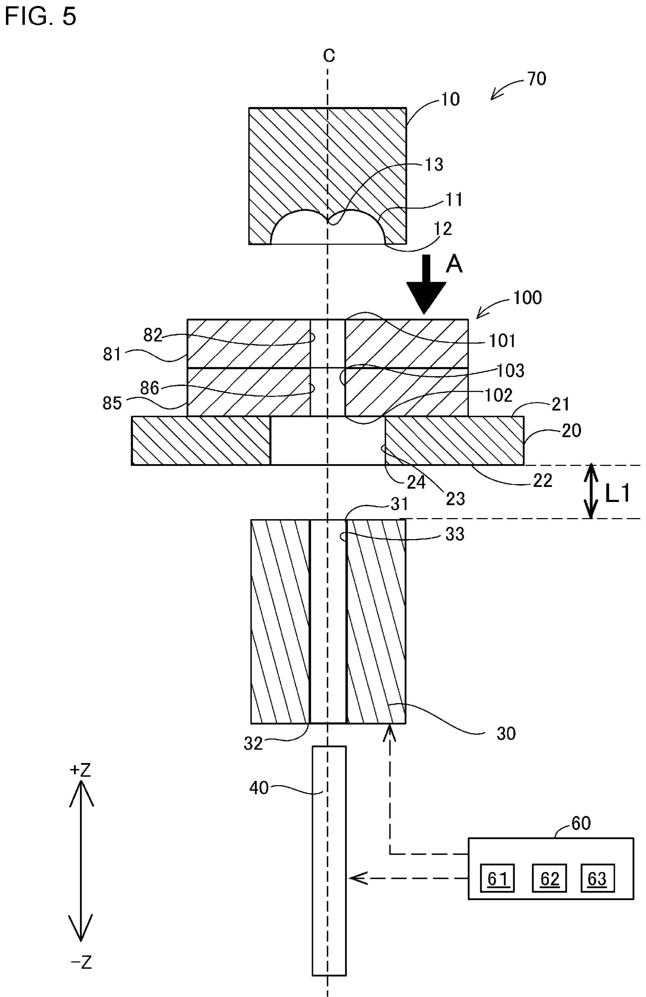

FIG. 4 is a flowchart of a fastening method using the fastening device 70. In step S10, the operator first places the workpieces 81 and 85 on the fastening device 70 in a stacked manner. In the present embodiment, as shown in FIG. 5, the operator places the workpieces 81 and 85 on an end face 21 of the second mold 20 in the positive Z-direction. The workpieces 81 and 85 may be placed on the fastening device 70 to have the central axes of the through-holes 82 and 86 substantially aligned with a central axis C of the jigs in the fastening device 70. In the present embodiment, the central axis C is coaxial with the central axis of the holding through-hole 33 and the central axis of the through-hole 23. The central axis C passes through substantially the center of the opening 12 and the protrusion 13 in the first mold 10. The workpieces 81 and 85 stacked on each other to cause the through-holes 82 and 86 to connect with each other in the Z-direction are hereafter also referred to as a fastening target group 100. The fastening target group 100 has a first opening 101 in the positive Z-direction, a second opening 102 in the negative Z-direction, and an interconnected hole 103 defined by the through-holes 82 and 86.

In step S10, the operator further moves the first mold 10 in the direction indicated by arrow A in FIG. 5, or specifically, the negative Z-direction, to cause the first mold 10 to come in contact with the fastening target group 100. In this manner, the operator covers the first opening 101 with the first mold 10. When step S10 is performed, the interconnected hole 103 in the fastening target group 100 connects with the recess 11 on the first mold 10 and the through-hole 23 in the second mold 20. In step S10, the first mold 10, the fastening target group 100, and the second mold 20 may be held by, for example, a clamp. This reduces misalignment of the fastening target group 100 with respect to the fastening device 70. When the fastening target group 100 can be maintained at a position in the Z-direction, the fastening target group 100 may be held and secured between the first mold 10 and the second mold 20 by moving the first mold 10 in the negative Z-direction relative to the fastening target group 100 and the second mold 20 in the positive Z-direction in step S10.

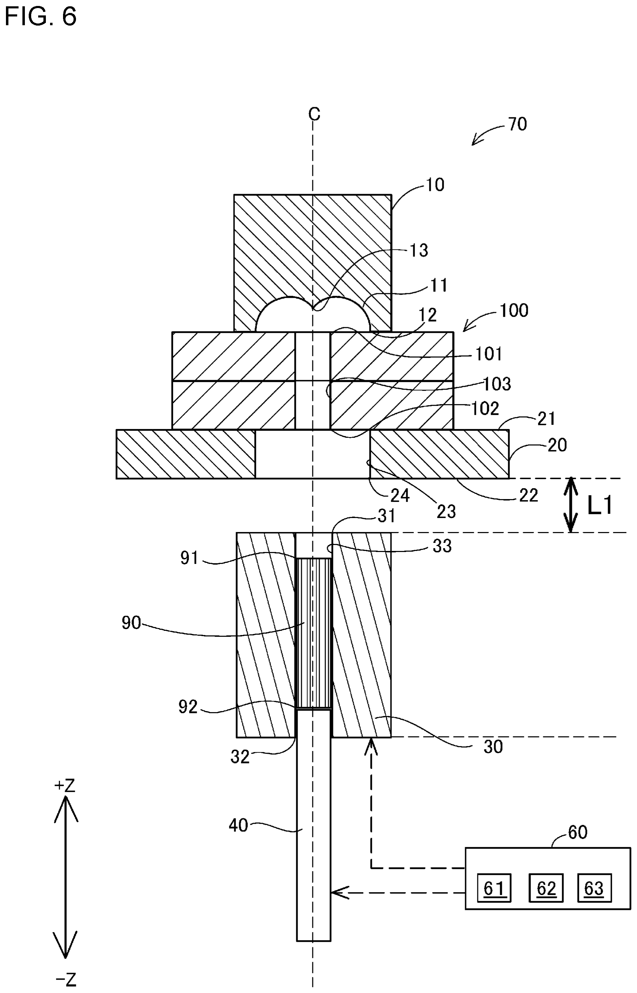

In step S20, the operator places the rod 90 in the holder 30. In the present embodiment, as shown in FIG. 6, the rod 90 is inserted into the holding through-hole 33 in the holder 30. The insertion jig 40 is then inserted into the holding through-hole 33 with the rod 90 inserted in the holding through-hole 33. In the present embodiment, the Z-direction is the vertical direction, and the holding through-hole 33 extends in the Z-direction. Thus, the insertion jig inserted into the holding through-hole 33 through the opening 32 of the holding through-hole 33 reduces the likelihood that the rod 90 moves in the negative Z-direction, or in other words, the vertically downward direction. The insertion jig 40 can thus also serve as a holder for holding the rod 90 in the holding through-hole 33. When the rod 90 can be retained in position with the holder 30 alone, the insertion jig 40 may not be inserted into the holding through-hole 33 in step S20. Steps S10 and S20 may be performed at the same time or in any order.

In step S30, the heater 50 heats the rod 90 outside the fastening target group 100. Outside the fastening target group 100 refers to a position spaced from the fastening target group 100 in the Z-direction. Outside the fastening target group 100 refers to a position at which the heater 50 is not in direct contact with the fastening target group 100. In step S30, for example, the operator operates the heater 50 through an input device. The heater 50 thus receives power and heats the rod 90 in the holding through-hole 33. The heating temperature in the holding through-hole 33 in step S30 is higher than or equal to the softening point of the thermoplastic resin 94 contained in the rod 90. The heating temperature may be higher than or equal to the melting point of the thermoplastic resin 94. The heating temperature and the heating time used by the heater 50 can be predetermined by experiments or simulation using, for example, the shape of the holder 30, the structure of the heater 50, and the properties of the thermoplastic resin 94. As shown in FIG. 5, the holder 30 and the heater 50 are spaced from the second mold 20 by the distance L1. The distance L1 is a distance by which thermal effects on the fastening target group 100 are reduced during heating of the rod 90.

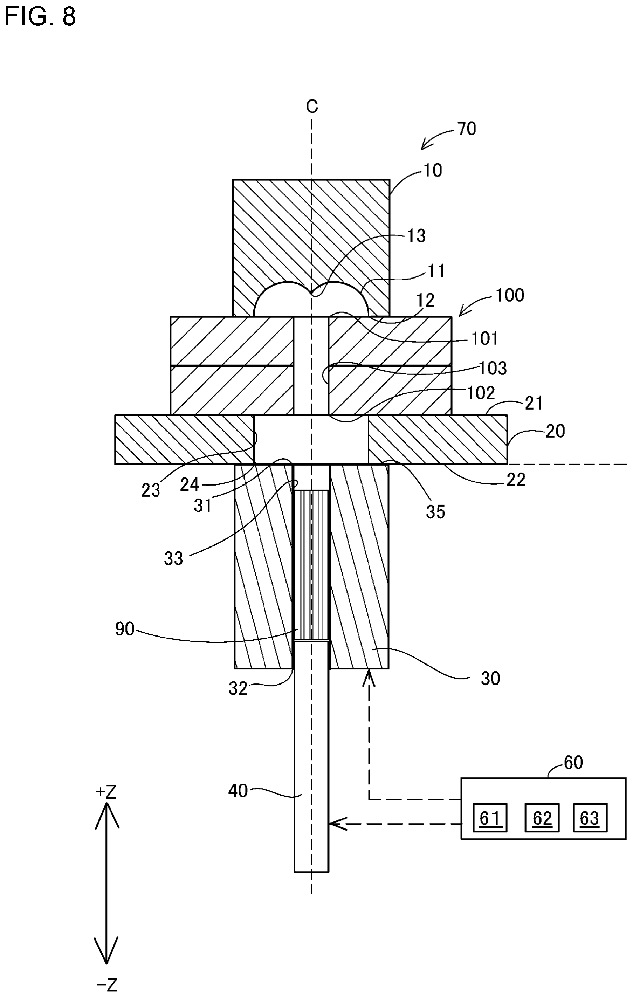

After the rod 90 is heated, the operator moves the holder 30 toward the fastening target group 100 with the controller 60 in step S40. In the present embodiment, as shown in FIG. 8, the operator moves the holder 30 and the insertion jig 40 in the positive Z-direction until an end face 35 of the holder 30 in the positive Z-direction comes in contact with an end face 22 of the second mold 20 in the negative Z-direction. In other words, the operator moves the holder 30 and the insertion jig 40 relative to the fastening target group 100 until the distance L1 becomes zero. When step S40 is performed, the holding through-hole 33 connects with the interconnected hole 103 in the fastening target group 100. More specifically, the recess 11 on the first mold 10, the interconnected hole 103, the through-hole 23 in the second mold 20, and the holding through-hole 33 connect with one another.

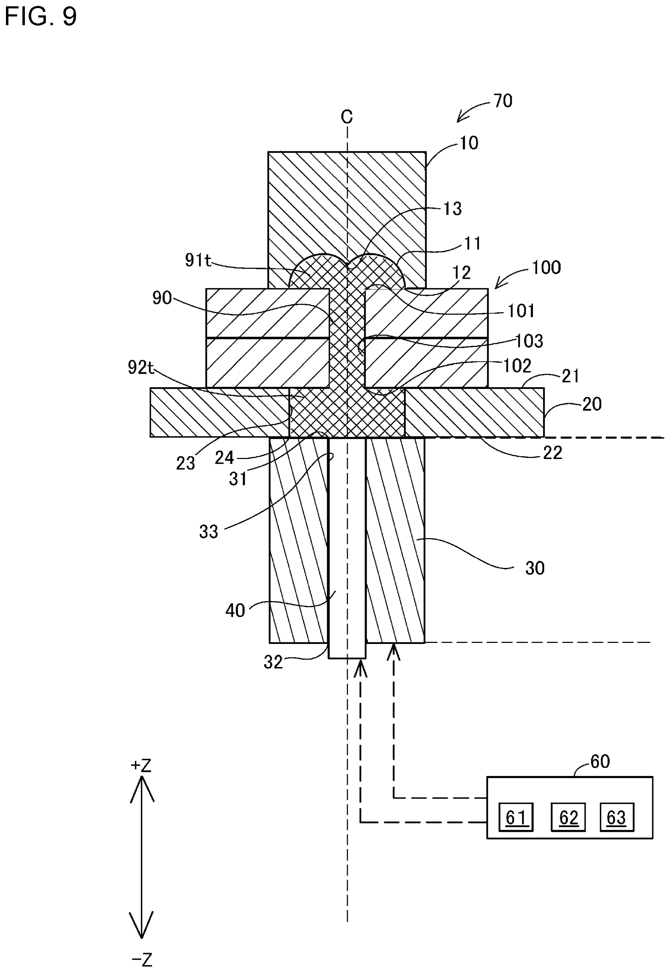

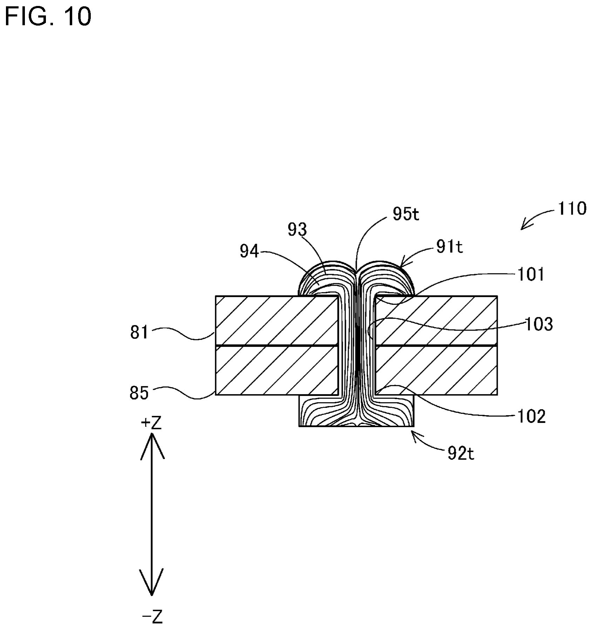

In step S50, the operator inserts the heated rod 90 into the interconnected hole 103 through the second opening 102 in the fastening target group 100. In the present embodiment, the operator moves the insertion jig 40 in the positive Z-direction with the controller 60 to insert the heated rod 90 into the interconnected hole 103 in the fastening target group 100 through the holding through-hole 33 and the through-hole 23 in the second mold 20. In the present embodiment, the amount of movement of the insertion jig 40 is predetermined by experiments or simulation. The amount of movement is an amount of movement by which the heated rod 90 reaches the first mold 10 and fills the interconnected hole 103 and the through-hole 23 in the second mold 20. In the present embodiment, the distal end of the heated rod 90 reaches the protrusion 13 on the recess 11 on the first mold 10, and spreads substantially radially from the protrusion 13 toward the outer edge of the recess 11. When step S50 is performed, the interconnected hole 103, the recess 11 on the first mold 10, the interconnected hole 103, and the through-hole 23 in the second mold 20 are filled with the heated rod 90 as shown in FIG. 9. When step S50 is performed, the distal end and the rear end of the heated rod 90 deform, shaping a first end portion 91t and a second end portion 92t. The first end portion 91t is shaped by the distal end of the heated rod 90 being pressed against the recess 11 on the first mold 10 to deform. The second end portion 92t is shaped by the rear end of the heated rod 90 deforming in the through-hole 23 in the second mold 20. Although the entire section of the rod 90 in the fastening state is cross-hatched in FIG. 9 for simplicity of illustration, the reinforcing fibers 93 actually appear on the section of the rod 90 in the fastening state as shown in FIG. 10.

In step S50, the operator maintains the positional relationship of the holder 30 and the rod 90 with the fastening target group 100 until the thermoplastic resin 94 is cooled and solidifies. In the present embodiment, the thermoplastic resin 94 is cooled at room temperature. When the thermoplastic resin 94 solidifies, the operator removes the fastening target group 100 fastened with the rod 90 from the fastening device 70. The rod 90 and the fastening target group 100 fastened with the rod 90 are hereafter also collectively referred to as a fastening structure 110. The various processes performed by the operator with the above fastening method may be performed by the controller 60 or a robot.

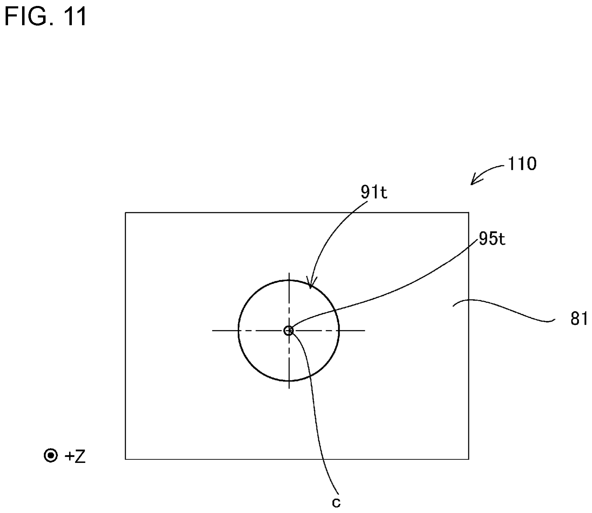

FIG. 10 is a schematic sectional view of the fastening structure 110. FIG. 11 is a diagram of the fastening structure 110 as viewed in the positive Z-direction. In the present embodiment, the rod 90 containing the reinforcing fibers 93 is heated and then inserted into the interconnected hole 103 in the fastening target group 100 to fasten the fastening target group 100. The reinforcing fibers 93 are oriented in the Z-direction, which is the same as the direction in which the interconnected hole 103 extends and the insertion jig 40 is inserted. The continuity of the reinforcing fibers 93 is thus maintained throughout the first end portion 91t, the interconnected hole 103, and the second end portion 92t in the fastening structure 110 as shown in FIG. 10. The reinforcing fibers 93 maintaining their continuity include the reinforcing fibers 93 maintaining a predetermined length in the predetermined direction. In other words, the property of the reinforcing fibers 93 as continuous fibers is maintained in the fastening structure 110. The first mold 10 includes the protrusion 13 protruding in the negative Z-direction on a center portion of the recess 11. The heated rod 90 thus reaches the protrusion 13 and spreads substantially radially in the recess 11 from the protrusion 13. Thus, in the first end portion 91t, the reinforcing fibers 93 spread in the recess 11 from the protrusion 13 toward the outer edge. As shown in FIG. 11, the first end portion 91t includes a center portion having a recess 95t recessed to correspond to the protrusion 13 on the first mold 10. The first end portion 91t has an external shape of substantially a hemisphere with a recessed center portion.

In the fastening device 70 according to the present embodiment and with the fastening method using the fastening device 70 described above, the rod 90 is inserted into the interconnected hole 103 after being heated outside the fastening target group 100, or in other words, at a position away from the fastening target group 100. This can reduce thermal effects on the fastening target group 100 during heating of the rod 90. The rod 90 is heated at a position away from the fastening target group 100. The entire rod 90 can be easily heated as compared with a structure in which, for example, the rod 90 is heated with a heater inserted in the interconnected hole 103 in the fastening target group 100. This reduces the likelihood of non-uniform heating of the rod 90. This allows the heated rod 90 to spread in the interconnected hole 103 in the fastening target group 100, thus fastening the fastening target group 100 firmly.

In the present embodiment, the reinforcing fibers 93 in the rod 90 are continuous fibers oriented in the same direction as the interconnected hole 103 extends and the insertion jig 40 is inserted. This further increases the strength of the fastening structure 110. The continuity of the reinforcing fibers 93 is also maintained in the first end portion 91t and the second end portion 92t of the rod 90 in the fastening state. This effectively increases the strength of the fastening structure 110 in a direction in which the workpieces are to be separated.

In the present embodiment, the heated rod 90 is inserted into the interconnected hole 103 through the second opening 102 until the heated rod 90 reaches the recess 11 on the first mold 10. This easily shapes the first end portion 91t. Further, the first mold 10 with an intended shape allows the first end portion 91t to be shaped as intended.

In the present embodiment, the first mold 10 includes the protrusion 13 protruding in the negative Z-direction on the center portion of the recess 11. This allows the heated rod 90 to reach the protrusion 13 and spread in the recess 11. The reinforcing fibers 93 can thus be distributed substantially radially from the protrusion 13 to an outer edge portion in the recess 11, reducing uneven distribution of the reinforcing fibers 93. This further improves the strength of the fastening structure 110.

The protrusion 13 is located at the center of the recess 11 on the first mold 10. This structure reduces the amount of rod 90 for shaping the first end portion 91t as compared with a structure in which the recess 11 does not include the protrusion 13. This reduces the manufacturing cost of structures including many fastened portions, such as fuselage parts of an aircraft.

In the present embodiment, the heated rod 90 is inserted into the interconnected hole 103 through the through-hole 33 in the holder 30 and the through-hole 23 in the second mold 20 in response to the insertion jig 40 being inserted through the opening 32 in the holder 30 in the positive Z-direction. In this case, the heated rod 90 also spreads in the through-hole 23 in the second mold 20. This shapes the second end portion 92t of the rod 90 in the fastening state in the through-hole 23. Further, the through-hole 23 in the second mold 20 with an intended shape allows the second end portion 92t to be shaped as intended.

In the present embodiment, the rod 90 formed from the same type of composite material as the fastening target group 100 can be used for fastening. This eliminates the time and effort to separate the fastening target group 100, or specifically, the workpieces 81 and 85, and the rod 90 when, for example, the fastening structure 110 is discarded or the fastening structure 110 is crushed to extract the material for reuse.

The fastening device 70 described in the present embodiment may be modified in various manners. For example, the operator can change the shapes of the first mold 10 and the second mold 20 to allow the fastening structure 110 to have an intended shape. Fastening devices using molds different from the molds in the first embodiment and fastening structures formed by those fastening devices will be described below.

### Second Embodiment

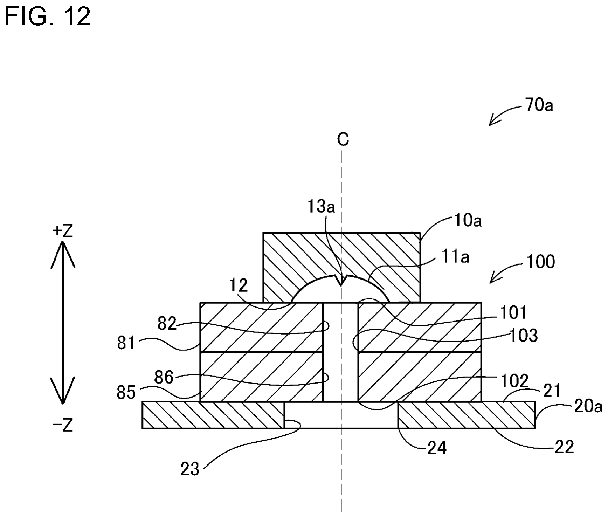

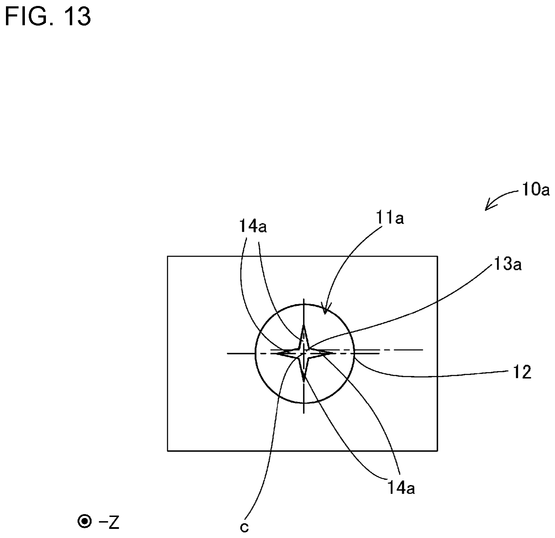

A fastening device 70a according to a second embodiment and a fastening structure 110a formed by the fastening device 70a will be described with reference to FIGs. 12 to 15. As shown in FIG. 12, a first mold 10a in the second embodiment has a recess 11a recessed in the positive Z-direction as in the first embodiment. The first mold 10a includes a protrusion 13a protruding in the negative Z-direction on a center portion of the recess 11a. As shown in FIG. 13, the protrusion 13a in the second embodiment differs from the protrusion 13 in the first embodiment in that the protrusion 13a includes multiple vertex portions 14a extending from the center portion toward an outer edge portion of the recess 11a. The multiple vertex portions 14a are arranged radially outward from the center of the recess 11a. In the present embodiment, the protrusion 13a includes four vertex portions 14a. A second mold 20a in the second embodiment has the same shape as the second mold 20 except that the second mold 20a is thinner in the positive Z-direction than the second mold 20 in the first embodiment.

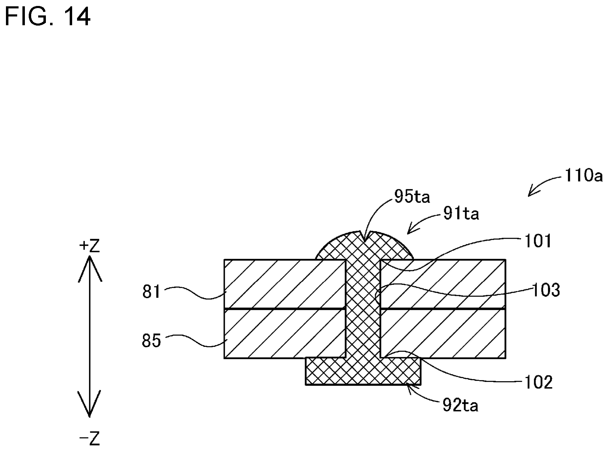

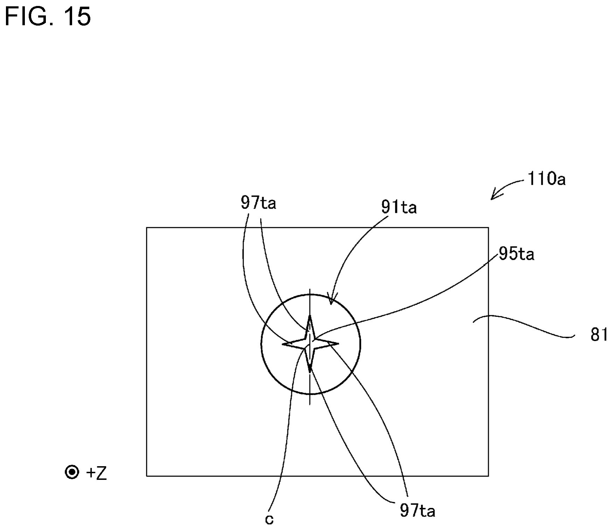

As shown in FIGs. 14 and 15, the fastening device 70a forms the fastening structure 110a having a recess 95ta on a center portion of a first end portion 91ta. The recess 95ta has a shape corresponding to the protrusion 13a on the first mold 10a. As shown in FIG. 14, the recess 95ta has grooves 97ta recessed to correspond to the multiple vertex portions 14a and arranged radially.

Although the reinforcing fibers 93 are not shown as appropriate in FIG. 14 and the subsequent figures, the reinforcing fibers 93 are, in the first end portion 91ta, distributed substantially radially in the recess 11a along the vertex portions 14a in the present embodiment. In the present embodiment as well, the continuity of the reinforcing fibers 93 is maintained throughout the first end portion 91ta, the interconnected hole 103, and a second end portion 92ta in the fastening structure 110a. The same applies to the embodiments described below.

The other components of the fastening device 70a and the fastening method in the second embodiment are the same as those in the first embodiment. Thus, the same effects as in the first embodiment are produced in the second embodiment as well. Further, the protrusion 13a on the first mold 10a includes the multiple vertex portions 14a. The reinforcing fibers 93 can thus be distributed along the vertex portions 14a in the first end portion 91ta. This allows the first end portion 91ta to have a shape and a fiber orientation that increase the fastening strength of the workpieces 81 and 85. Further, the structure with the protrusion 13a including the multiple vertex portions 14a can reduce the weight of a structure including the fastening structure 110a, as compared with a structure in which the protrusion 13a does not include the vertex portions 14a. This structure can also reduce the manufacturing cost. The fastening method using the fastening device 70a according to the present embodiment may thus be used to manufacture structures including many fastened portions.

### Third Embodiment

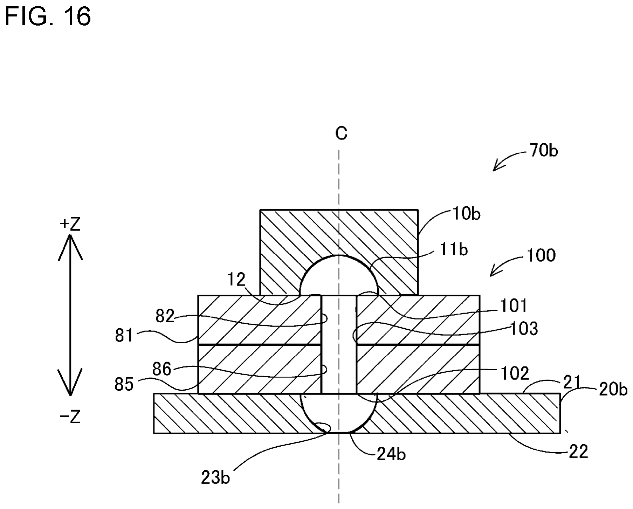

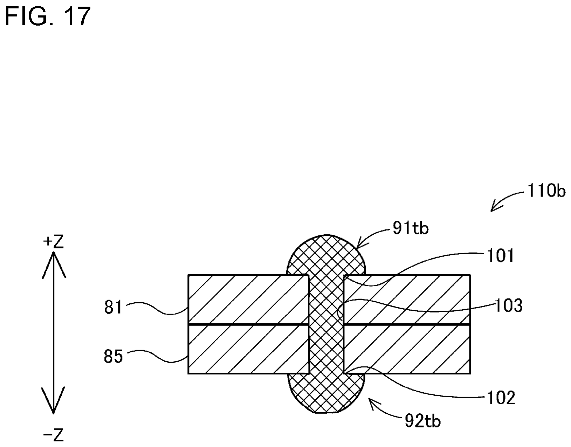

A fastening device 70b according to a third embodiment and a fastening structure 110b formed by the fastening device 70b will be described with reference to FIGs. 16 and 17. In the third embodiment, as shown in FIG. 16, a first mold 10b has a recess 11b recessed in the positive Z-direction. The recess 11b is semicircular in a sectional view. The first mold 10b differs from the first molds 10 and 10a in the above embodiments in that the first mold 10b includes no protrusion 13.

A second mold 20b has a recess 23b recessed in the negative Z-direction. The recess 23b is substantially semicircular in a sectional view. The recess 23b has an opening 24b in the negative Z-direction. The recess 23b also serves as a molding through-hole extending through the second mold 20b in the Z-direction. As shown in FIG. 17, the fastening structure 110b formed by the fastening device 70b includes a first end portion 91tb and a second end portion 92tb that are substantially semicircular in a sectional view. The other components of the fastening device 70b and the fastening method in the third embodiment are the same as those in the first embodiment. Thus, the same effects as in the first embodiment are produced in the third embodiment as well.

### Fourth Embodiment

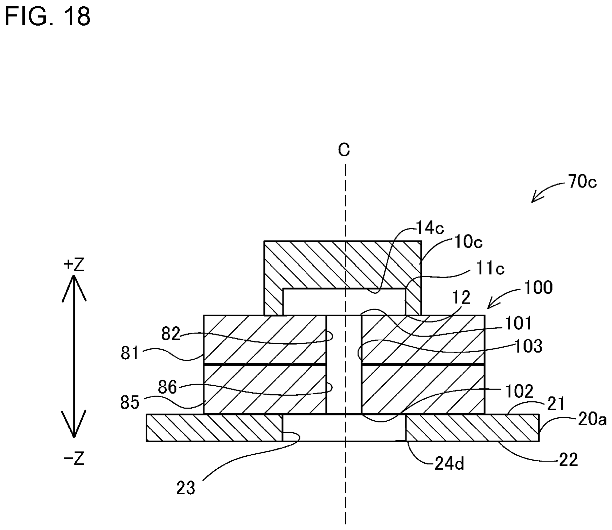

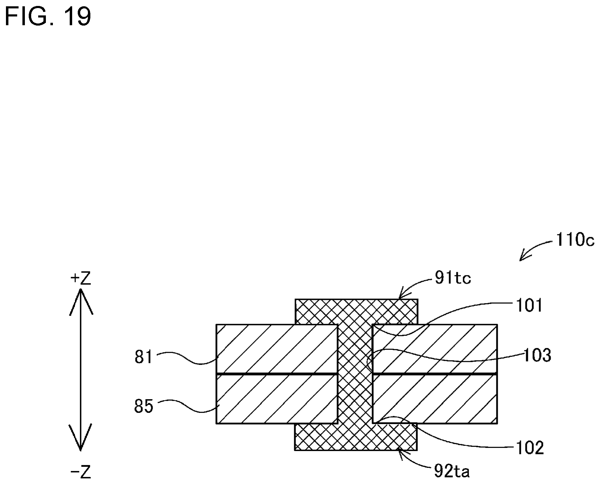

A fastening device 70c according to a fourth embodiment and a fastening structure 110c formed by the fastening device 70c will be described with reference to FIGs. 18 and 19. As shown in FIG. 18, a first mold 10c has a recess 11c recessed in the positive Z-direction as in the first embodiment. The first mold 10c differs from the first molds 10 to 10b in the above embodiments in that the recess 11c on the first mold 10c is rectangular in a sectional view. The recess 11c in the present embodiment has a bottom surface 14c perpendicular to the central axis C. The fastening structure 110c thus includes a first end portion 91tc that is rectangular in a sectional view as shown in FIG. 19. The second mold 20a in the fastening device 70c is the same as that in the second embodiment. The other components of the fastening device 70c and the fastening method are the same as those in the first embodiment. Thus, the same effects as in the first embodiment are produced in the fourth embodiment as well.

### Fifth Embodiment

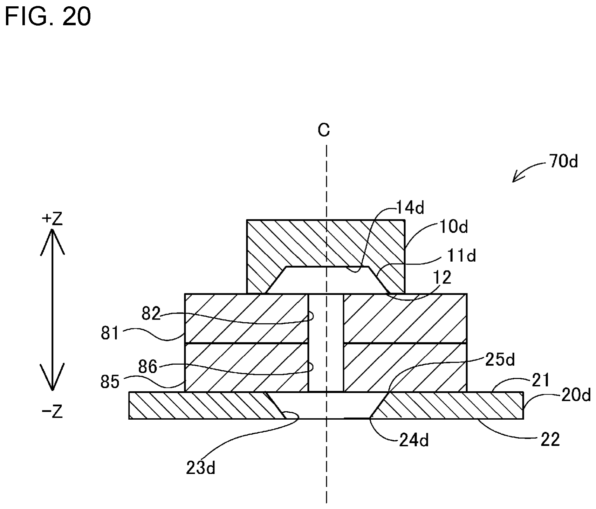

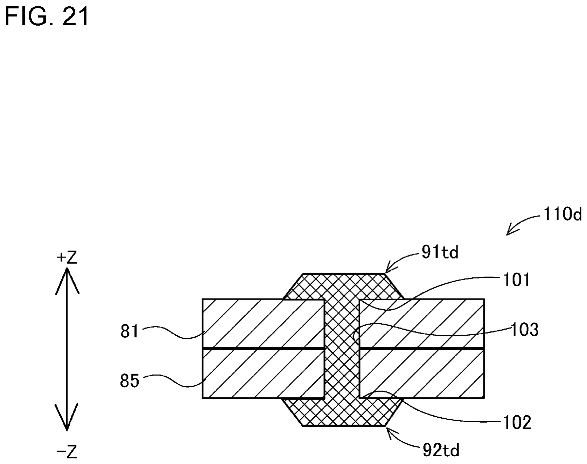

A fastening device 70d according to a fifth embodiment and a fastening structure 110d formed by the fastening device 70d will be described with reference to FIGs. 20 and 21. In the fifth embodiment, as shown in FIG. 20, a first mold 10d has a recess 11d recessed in the positive Z-direction. The recess 11d has a bottom surface 14d perpendicular to the central axis C. In the present embodiment, the opening 12 has a larger diameter than the bottom surface 14d. In other words, the recess 11d has a trapezoidal section. A second mold 20d has a recess 23d recessed in the negative Z-direction. The recess 23d also serves as a molding through-hole extending through the second mold 20d in the Z-direction. The recess 23d has an opening 25d in the positive Z-direction larger than an opening 24d in the negative Z-direction. In other words, the recess 23d has a trapezoidal section. The fastening structure 110d formed by the fastening device 70d thus includes a first end portion 91td and a second end portion 92td that are trapezoidal in a sectional view as shown in FIG. 21. The other components of the fastening device 70d and the fastening method in the fifth embodiment are the same as those in the first embodiment. Thus, the same effects as in the first embodiment are produced in the fifth embodiment as well.

### Sixth Embodiment

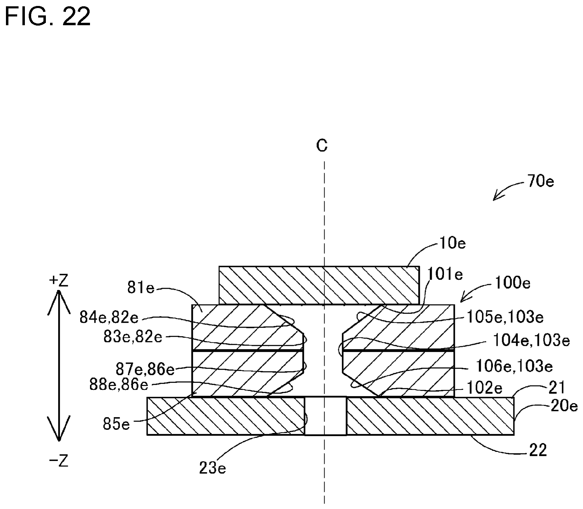

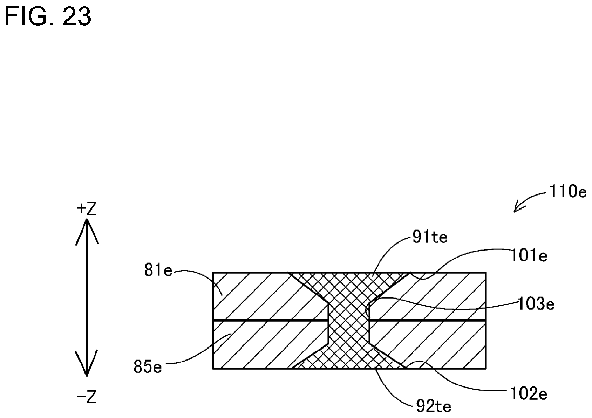

A fastening device 70e according to a sixth embodiment and a fastening structure 110e formed by the fastening device 70e will be described with reference to FIGs. 22 and 23. Workpieces 81e and 85e in the present embodiment differ from the workpieces 81 and 85 in the first embodiment in that the workpieces 81e and 85e respectively have through-holes 82e and 86e with inner diameters that are not substantially constant in the Z-direction. The workpiece 81e has a first hole 83e with a substantially constant inner diameter, and a second hole 84e in the positive Z-direction of the first hole 83e with an inner diameter that is larger in the positive Z-direction. The through-hole 82e in the workpiece 81e is defined by the first hole 83e and the second hole 84e. The workpiece 85e has a third hole 87e with a substantially constant inner diameter, and a fourth hole 88e in the negative Z-direction of the third hole 87e with an inner diameter that is larger in the negative Z-direction. The through-hole 86e in the workpiece 85e is defined by the third hole 87e and the fourth hole 88e. A fastening target group 100e including the workpieces 81e and 85e stacked on each other thus includes a center portion 104e defined by the first hole 83e and the third hole 87e in the workpieces 81e and 85e, a larger-diameter portion 105e defined by the second hole 84e in the workpiece 81e, and a larger-diameter portion 106e defined by the fourth hole 88e in the workpiece 85e. The center portion 104e and the larger-diameter portions 105e and 106e define an interconnected hole 103e in the fastening target group 100e. The interconnected hole 103e includes a first opening 101e and a second opening 102e larger than the inner diameter of the center portion 104e in the interconnected hole 103e.

A first mold 10e in the sixth embodiment is substantially a plate and covers the first opening 101e of the interconnected hole 103e. A second mold 20e has a through-hole 23e with an inner diameter substantially equal to the inner diameter of the center portion 104e in the interconnected hole 103e. The second opening 102e of the interconnected hole 103e is partially covered by the end face 21 of the second mold 20e.

As described above, the first mold 10e has no recess recessed in the positive Z-direction. The heated rod 90 is thus pressed against the first mold 10e and spreads in the larger-diameter portion 105e in the present embodiment. This shapes a first end portion 91te in a portion corresponding to the larger-diameter portion 105e in the interconnected hole 103e. The heated rod 90 fills the center portion 104e and the larger-diameter portion 105e in the interconnected hole 103e. This shapes a second end portion 92te in a portion corresponding to the larger-diameter portion 106e in the interconnected hole 103e. The fastening structure 110e formed thus includes the first end portion 91te and the second end portion 92te of the rod 90 in the fastening state inside the fastening target group 100e. In the fastening structure 110e, the first end portion 91te has an end face in the positive Z-direction substantially on the same plane as the end face of the workpiece 81e in the positive Z-direction, and the second end portion 92te has an end face in the negative Z-direction substantially on the same plane as the end face of the workpiece 85e in the negative Z-direction. The other components of the fastening device 70e and the fastening method in the sixth embodiment are the same as those in the first embodiment. Thus, the same effects as in the first embodiment are produced in the sixth embodiment as well. Further, in the sixth embodiment, the fastening structure 110e in which the first end portion 91te and the second end portion 92te do not protrude from the fastening target group 100e, or specifically, the workpieces 81e and 85e, can be formed. This structure can reduce the weight of a structure including the fastening structure 110e, as compared with a structure in which the first end portion 91te and the second end portion 92te protrude from the fastening target group 100e. This structure can also reduce the manufacturing cost. The fastening method using the fastening device 70e according to the present embodiment may thus be used to manufacture structures including many fastened portions.

In the present embodiment, the second mold 20e is mainly used to hold the fastening target group 100e. The second mold 20e may thus be eliminated when, for example, a clamp is used to maintain the fastening target group 100e at a position in the Z-direction.

### Seventh Embodiment

In a seventh embodiment, a fastening device and a fastening method that can form, in a center portion of the second end portion of the rod 90 in the fastening state, a recess similar to the recess on the first end portion 91t in the first embodiment will be described.

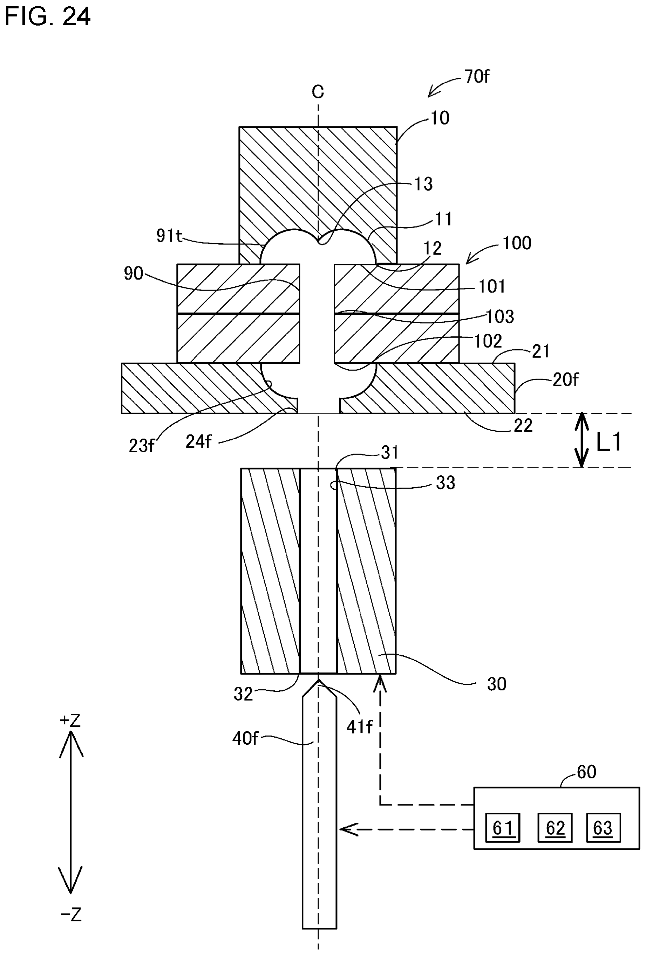

FIG. 24 is a diagram of a fastening device 70f according to the seventh embodiment. The fastening device 70f includes the same first mold 10 as in the first embodiment. A second mold 20f has a recess 23f recessed in the negative Z-direction. The recess 23f has an opening 24f in the negative Z-direction. The recess 23f also serves as a molding through-hole extending through the second mold 20f in the Z-direction. An insertion jig 40f in the fastening device 70f differs from the insertion jig 40 in the first embodiment in that the insertion jig 40f has, in the positive Z-direction, a conical end protruding in the positive Z-direction. The end of the insertion jig 40 in the positive Z-direction is also referred to as a protruding end 41f.

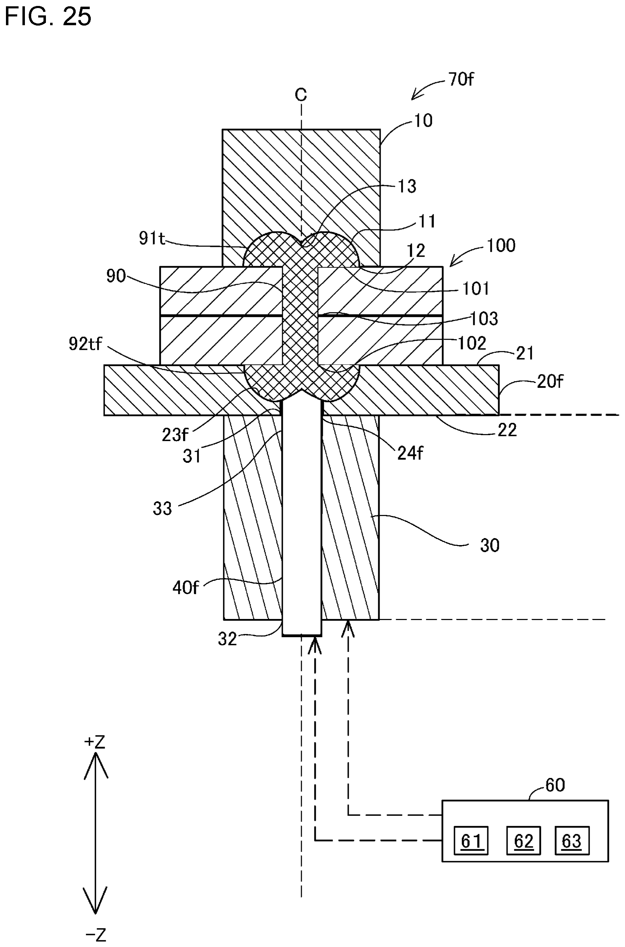

FIG. 25 is a diagram illustrating step S50 in the fastening method according to the seventh embodiment. In step S50, the operator moves the insertion jig 40f in the positive Z-direction. The heated rod 90 is thus inserted into the interconnected hole 103 in the fastening target group 100 from the holding through-hole 33 through the opening 24f and the recess 23f in the second mold 20f. The distal end of the heated rod 90 reaches the protrusion 13 on the recess 11 on the first mold 10, and spreads substantially radially in the recess 11 from the protrusion 13. The rear end of the heated rod 90 is pushed with the protruding end 41f of the insertion jig 40f in the positive Z-direction. The heated rod 90 thus spreads, from the protruding end 41f, into the space defined by the protruding end 41f and the recess 23f on the second mold 20f. More specifically, the heated rod 90 spreads substantially radially from the protruding end 41f toward the outer edge of the recess 23f.

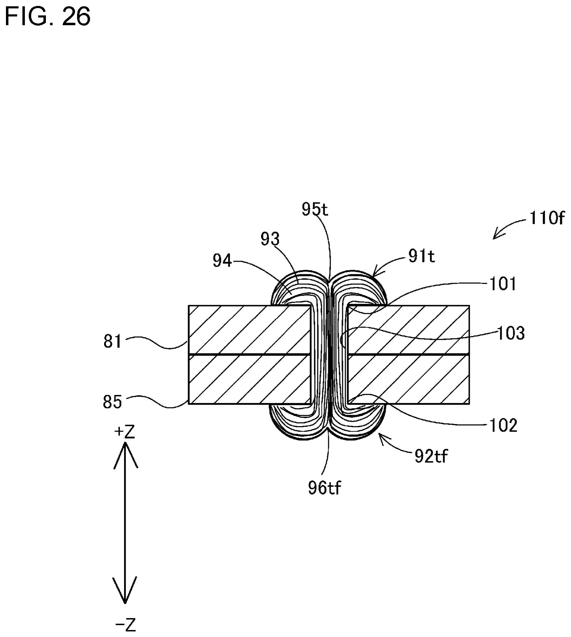

FIG. 26 is a schematic sectional view of a fastening structure 110f formed by the fastening device 70f. FIG. 26 corresponds to FIG. 10 in the first embodiment. In the fastening structure 110f, the first end portion 91t includes a center portion having the recess 95t recessed to correspond to the protrusion 13 on the first mold 10. A second end portion 92tf includes a center portion having a recess 96tf recessed to correspond to the protruding end 41f. The first end portion 91t and the second end portion 92tf have external shapes of substantially hemispheres with recessed center portions. The continuity of the reinforcing fibers 93 is maintained throughout the first end portion 91t, the interconnected hole 103, and the second end portion 92tf in the fastening structure 110f. In the first end portion 91t, the reinforcing fibers 93 are distributed substantially radially in the recess 11. In the second end portion 92tf, the reinforcing fibers 93 are distributed substantially radially in the recess 23f.

In the seventh embodiment, the reinforcing fibers 93 can be distributed substantially radially in the second end portion 92tf in addition to the first end portion 91t, reducing uneven distribution of the reinforcing fibers 93. This further improves the strength of the fastening structure 110f. This also reduces the manufacturing cost of structures including many fastened portions more effectively.

### Other Embodiments

The fastening device according to one or more embodiments of the present disclosure may fasten any number of multiple workpieces, and may fasten three or more workpieces. The through-holes in the workpieces may have different inner diameters. The workpieces may be formed from a metal material, rather than fiber reinforced composites. The workpieces may be formed from different materials. The rod 90 may not be cylindrical, and may be a prism or a box. In the above embodiments, the reinforcing fibers 93 contained in the rod 90 are oriented in the direction along the axis AX. However, the reinforcing fibers 93 may be oriented in a direction intersecting with the direction along the axis AX. The rod 90 may contain short fibers as the reinforcing fibers 93. For the rod 90 containing continuous fibers, the continuous fibers may not be continuous from the end 901 to the other end 902 of the rod 90, and may have a predetermined length. For example, the predetermined length may be substantially 80% of the length of the rod 90. In some embodiments, the predetermined length may be a half or one-third of the length of the rod 90 in the direction along the axis AX.

The workpieces 81 and 85 included in the fastening target group 100 may respectively have the through-holes 82 and 86. The workpieces 81e and 85e included in the fastening target group 100e may respectively have the through-holes 82e and 86e. The through-holes may have different inner diameters. The central axis C of the fastening device 70 may not be fully aligned with the central axes C of the through-hole 82 and the through-hole 86 when the interconnected hole 103 is defined in the Z-direction by stacking the workpieces 81 and 85 or 81e and 85e in step S10.

The molds in the fastening devices 70 to 70g may not have the shapes in the above embodiments. For example, the shapes of the recesses 11 to 11d, 23b, 23d, and 23f on the molds, the arrangement and the number of protrusions 13 and 13a, and the arrangement and the number of vertex portions 14a may be changed as appropriate. The holder 30 may temporarily hold the rod 90 while the rod 90 is heated. The insertion jigs 40 and 40f may have any shape as appropriate in which the insertion jigs 40 and 40f can push the heated rod 90 into the respective interconnected holes 103 and 103e through the through-hole 33 in the holder 30.

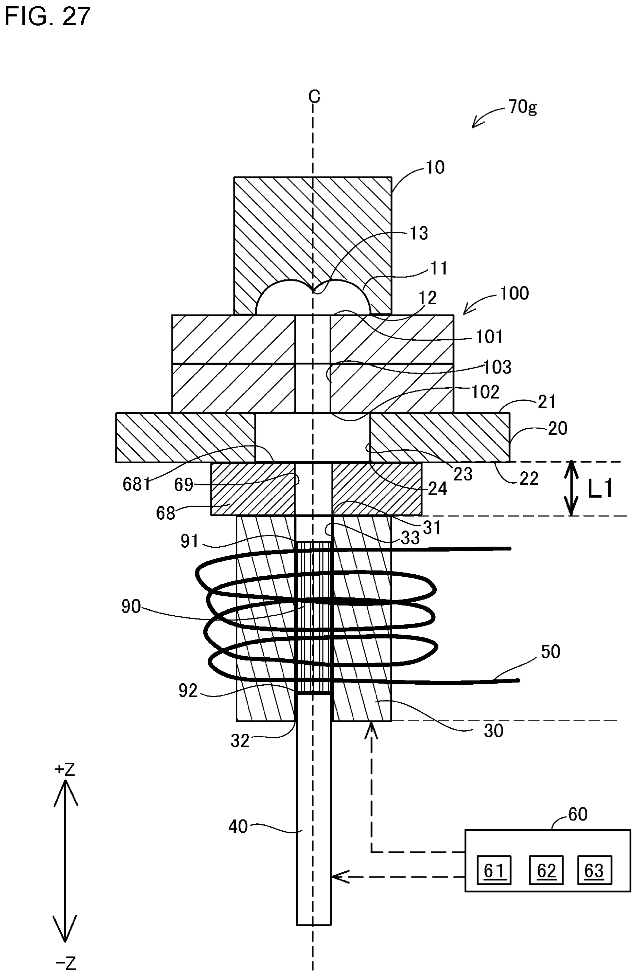

In each of the fastening devices 70 to 70g, a heat insulator may be located between the holder 30 and each of the second molds 20 to 20e. FIG. 27 shows the fastening device 70g in which a heat insulator 68 is used. The heat insulator 68 has a through-hole 69 extending through the heat insulator 68 in the Z-direction. The heat insulator 68 has, in the positive Z-direction, an end face 681 in contact with the end face 22 of the second mold 20 in the negative Z-direction. The operator heats, in the fastening device 70g, the rod 90 through the holder 30, and then inserts the insertion jig 40 into the through-hole 33 in the holder 30 without moving the holder 30. In this embodiment, the operator moves the insertion jig 40 in the positive Z-direction until the upper end of the insertion jig 40 in the positive Z-direction reaches the same plane as the end face 22 of the second mold 20. In this manner, the operator can insert the heated rod 90 into the interconnected hole 103 from the through-hole 33 through the through-hole 69 in the heat insulator 68 and the through-hole 23 in the second mold 20. In this embodiment, the opening 24 in the second mold 20 is covered by the end face 681 of the heat insulator 68 and the insertion jig 40 to shape the second end portion of the rod 90 in the fastening state. In this embodiment as well, thermal effects on the fastening target group 100 can be reduced during heating of the rod 90. In the present embodiment and the other embodiments, the amount of movement of the insertion jig 40 in the positive Z-direction may be adjusted as appropriate for, for example, the shapes of the second molds 20 to 20e or the shapes of the second end portions.

In step S50 in the fastening method according to the above embodiments, the insertion jigs 40 and 40f move in the positive Z-direction based on a predetermined amount of movement. The amount of movement is an amount of movement by which the heated rod 90 reaches the first molds 10 to 10e and fills the interconnected hole 103 and the through-holes 23 and 23e in the second molds 20 to 20f. In some embodiments, the operator may install a sensor that detects a load applied to the insertion jigs 40 and 40f in the fastening devices 70 to 70g, and push the insertion jigs 40 and 40f in the positive Z-direction until the load applied to the insertion jigs 40 and 40f reaches a predetermined threshold in step S50. The threshold may be determined based on the load when the heated rod 90 reaches the first molds 10 to 10e and fills the interconnected hole 103 and the through-holes 23 and 23e in the second molds 20 to 20f.

In the above embodiments, the first direction, in which, for example, the interconnected hole 103 in the fastening target group 100, the interconnected hole 103e in the fastening target group 100e, and the holding through-hole 33 extend, is the vertical direction. In some embodiments, the first direction may not be the vertical direction, and may be a direction intersecting with the vertical direction. The first direction may be, for example, the horizontal direction. The direction in which the rod 90 is inserted into the interconnected hole 103 may be a direction from the second openings 102 and 102e toward the first openings 101 and 101e, or may be any other direction such as the vertically downward direction. In other words, the direction in which the rod 90 is inserted into the interconnected hole 103 is not limited to the vertically upward direction, and may be any other direction toward the first molds 10 to 10e.

The present disclosure is not limited to the embodiments described above, and may be implemented in various aspects without departing from the spirit of the present disclosure. For example, the present disclosure is implementable in the aspects described below. Technical features in the embodiments described above that correspond to technical features in each of the aspects described below may be replaced or combined as appropriate to respond to some of or all of the issues described in the present disclosure or to achieve some of or all of the effects of the present disclosure. When the technical features are not described herein as essential technical features, such technical features may be deleted as appropriate.

(1) A fastening method according to a first aspect of the present disclosure fastens a plurality of workpieces having through-holes. The fastening method includes preparing a fastening target group including the plurality of workpieces stacked on one another to form an interconnected hole, heating a rod containing a reinforcing fiber and a thermoplastic resin outside the fastening target group, and inserting the heated rod into the interconnected hole through a second opening to fasten the plurality of workpieces in the fastening target group to one another. The interconnected hole is defined by the through-holes in the plurality of workpieces connecting with one another in a first direction. The interconnected hole includes a first opening and the second opening opposite to the first opening in the first direction.

In this aspect, the rod is inserted into the interconnected hole after being heated outside the fastening target group, or in other words, at a position away from the fastening target group. The fastening target group is thus less likely to be affected by heating. The rod is heated at the position away from the fastening target group. This allows the entire rod to be heated. The fastening target group can thus be fastened firmly with the rod inserted into the interconnected hole.

(2) In aspect (1), the reinforcing fiber may be oriented in a predetermined direction.

In this aspect, the fastening target group fastened with the heated rod can have higher strength in a direction parallel to the predetermined direction (the direction of the fiber orientation).

(3) In aspect (1) or aspect (2), the reinforcing fiber may be a continuous fiber.

In this aspect, the fastening target group fastened with the heated rod can have higher strength.

(4) The fastening method according to any one of aspects (1) to (3) may further include placing a first mold into contact with the fastening target group to cover the first opening. The fastening method may further include inserting the heated rod into the interconnected hole through the second opening until the heated rod reaches the first mold, and shaping a first end portion of the rod in a fastening state with the first mold.

In this aspect, the first end portion can be easily shaped by inserting the heated rod into the interconnected hole until the heated rod reaches the first mold.

In aspect (4), the first end portion may be shaped by pressing the distal end of the inserted rod against the first mold to deform the distal end.

(5) In any one of aspects (1) to (4), the first mold may have a recess connectable with the interconnected hole when the first mold is in contact with the fastening target group. The fastening method may further include inserting the heated rod into the interconnected hole through the second opening until the heated rod reaches the recess, and shaping the first end portion with the first mold.

In this aspect, the heated rod fills the recess when reaching the recess on the first mold. Thus, a fastening structure with the first end portion protruding from the interconnected hole can be easily formed.

(6) In aspect (5), the first mold may include a protrusion at a center of the recess. The fastening method may further include spreading the heated rod in the recess by inserting the heated rod into the interconnected hole through the second opening until the heated rod reaches the protrusion, and shaping the first end portion with the first mold.

In this aspect, the heated rod inserted into the interconnected hole spreads around the protrusion after reaching the protrusion. This reduces uneven distribution of the reinforcing fiber in the recess. This improves the strength of the fastening structure.

(7) The fastening method according to any one of aspects (1) to (6) may further include placing a second mold into contact with the fastening target group to cover the second opening. The second mold has a molding through-hole extending through the second mold in the first direction. The fastening method may further include inserting the heated rod into the interconnected hole through the molding through-hole and the second opening, and shaping a second end portion of the rod in a fastening state with the second mold.

In this aspect, the second end portion of the rod in the fastening state can be easily shaped.

(8) The fastening method according to any one of aspects (1) to (7) may further include holding the rod with a holder outside the fastening target group, and heating the rod through the holder.

In this aspect, the rod is held outside the fastening target group, or in other words, at a position away from the fastening target group, and the entire rod can be heated.

(9) In any one of aspects (1) to (8), the reinforcing fiber may be a continuous fiber oriented in a longitudinal direction of the rod. In the fastening method, the heating may include heating the rod outside the interconnected hole, and the inserting may include placing the heated rod to face the second opening with the longitudinal direction aligned with the first direction and inserting the heated rod into the interconnected hole through the second opening to fasten the plurality of workpieces in the fastening target group to one another.

In this aspect, the direction in which the interconnected hole extends is aligned with the direction in which the continuous fiber, which is the reinforcing fiber contained in the rod, is oriented. This maintains the orientation and the continuity of the reinforcing fiber in the interconnected hole. Thus, a fastening structure with the reinforcing fiber oriented in the direction in which the interconnected hole extends can be formed. This improves the strength of the fastening structure.

(10) In any one of aspects (1) to (9), the inserting may include inserting the rod into the interconnected hole through the second opening after heating, outside the interconnected hole, the rod to a temperature higher than or equal to a softening point of the thermoplastic resin.

In this aspect, the rod can be sufficiently spread in the interconnected hole, thus improving the strength of the fastening structure.

In aspect (10), the thermoplastic resin may be heated to a temperature higher than or equal to its melting point.

(11) A fastening device according to a second aspect of the present disclosure fastens a plurality of workpieces in a fastening target group to one another. The fastening target group has an interconnected hole extending in a first direction. The fastening device includes a first mold, a holder spaced from the first mold and facing the first mold in the first direction, a heater that heats an inside of a holding through-hole, and an insertion jig insertable into the holding through-hole in the first direction from the holder toward the first mold. The holder has the holding through-hole extending through the holder in the first direction.

In this aspect, the fastening device can place the fastening target group between the first mold and the holder, heat a rod held in the holding through-hole with the heater, and insert the heated rod into the interconnected hole in the fastening target group with the insertion jig.

In aspect (11), the heater may be referred to as a heating portion.

(12) In aspect (11), the first mold may have a recess recessed in the first direction from the holder toward the first mold.

In this aspect, the heated rod can fill the recess when reaching the recess on the first mold. Thus, a fastening structure with one end portion protruding from the interconnected hole can be easily formed.

(13) In aspect (12), the recess may include a protrusion in a center portion of the recess, and the protrusion may protrude in the first direction from the first mold toward the holder.

In this aspect, the heated rod spreads around the protrusion after reaching the protrusion. This reduces uneven distribution of a reinforcing fiber in the recess. This improves the strength of the fastening structure.

(14) In aspect (13), the protrusion may include a plurality of vertex portions arranged radially from a center of the recess when viewed in the first direction from the holder toward the first mold.

In this aspect, the reinforcing fiber can be distributed along the vertex portions. The weight of a structure including the fastening structure can be reduced as compared with a structure in which the recess does not include the vertex portions. Further, the manufacturing cost can be reduced. In aspect (14), the plurality of vertex portions being arranged radially may include the plurality of vertex portions extending from the protrusion, or the center of the recess, toward the outer edge of the recess, or the outside of the recess. The center of the recess may be aligned with the center of the interconnected hole in the fastening device.

(15) The fastening device according to any one of aspects (11) to (14) may further include a second mold between the first mold and the holder in the first direction. The second mold is spaced from the first mold. The second mold may have a molding through-hole extending through the second mold in the first direction.

In this aspect, the first mold and the second mold can shape one end portion of the heated rod and the other end portion of the heated rod.

### REFERENCE SIGNS LIST

10, 10a, 10b, 10c, 10d, 10e first mold
11, 11a, 11b, 11c, 11drecess
12 opening in first mold
13, 13a protrusion
14a vertex portion
14c, 14dbottom surface
20, 20a, 20b, 20c, 20d, 20e, 20f second mold
21 end face of second mold
22 end face of second mold
23, 23e through-hole
23b, 23d, 23f recess
24, 24b, 24d, 24f opening
25d opening
30 holder
31 opening
32 opening
33 holding through-hole
35 end face
40, 40f insertion jig
41f protruding end
50 heater
60 controller
61 actuator
62 control circuit
68 heat insulator
681 end face
69 through-hole
70, 70a, 70b, 70c, 70d, 70e, 70f, 70g fastening device
81, 85, 81e, 85e workpiece
82, 86, 82e, 86e through-hole
83e first hole
84e second hole
87e third hole
88e fourth hole
90 rod
901, 902 end of rod
91t, 91ta, 91tb, 91tc, 91td, 91te, 91t first end portion of rod in fastening state
92t, 92ta, 92tb, 92td, 92te, 92tf second end portion of rod in fastening state
93 reinforcing fiber
94 thermoplastic resin
95t, 95tarecess
96tf recess
97tagroove
100, 100e fastening target group
101 first opening
102, 102e second opening
102e second opening
103, 103e interconnected hole
104e center portion
105e larger-diameter portion
106e larger-diameter portion
110, 110a, 110b, 110c, 110d, 110e, 110f fastening structure
AX axis
C central axis
L1 distance

## Claims

1. A fastening method for fastening a plurality of workpieces having through-holes, the method comprising:
preparing a fastening target group including the plurality of workpieces stacked on one another to form an interconnected hole, the interconnected hole being defined by the through-holes in the plurality of workpieces connecting with one another in a first direction, the interconnected hole including a first opening and a second opening opposite to the first opening in the first direction;
heating a rod containing a reinforcing fiber and a thermoplastic resin outside the fastening target group; and
inserting the heated rod into the interconnected hole through the second opening to fasten the plurality of workpieces in the fastening target group to one another.

2. The fastening method according to claim 1, wherein
the reinforcing fiber is oriented in a predetermined direction.

3. The fastening method according to claim 1, wherein
the reinforcing fiber is a continuous fiber.

4. The fastening method according to claim 1, further comprising:
placing a first mold into contact with the fastening target group to cover the first opening; and
inserting the heated rod into the interconnected hole through the second opening until the heated rod reaches the first mold, and shaping a first end portion of the rod in a fastening state with the first mold.

5. The fastening method according to claim 4, wherein
the first mold has a recess connectable with the interconnected hole when the first mold is in contact with the fastening target group, and
the fastening method further comprises inserting the heated rod into the interconnected hole through the second opening until the heated rod reaches the recess, and shaping the first end portion with the first mold.

6. The fastening method according to claim 5, wherein
the first mold includes a protrusion at a center of the recess, and
the fastening method further comprises spreading the heated rod in the recess by inserting the heated rod into the interconnected hole through the second opening until the heated rod reaches the protrusion, and shaping the first end portion with the first mold.

7. The fastening method according to claim 1, further comprising:
placing a second mold into contact with the fastening target group to cover the second opening, the second mold having a molding through-hole extending through the second mold in the first direction; and
inserting the heated rod into the interconnected hole through the molding through-hole and the second opening, and shaping a second end portion of the rod in a fastening state with the second mold.

8. The fastening method according to claim 1, further comprising:
holding the rod with a holder outside the fastening target group; and
heating the rod through the holder.

9. The fastening method according to claim 1, wherein
the reinforcing fiber is a continuous fiber oriented in a longitudinal direction of the rod,
the heating includes heating the rod outside the interconnected hole, and
the inserting includes placing the heated rod to face the second opening with the longitudinal direction aligned with the first direction and inserting the heated rod into the interconnected hole through the second opening to fasten the plurality of workpieces in the fastening target group to one another.

10. The fastening method according to claim 1, wherein
the inserting includes inserting the rod into the interconnected hole through the second opening after heating, outside the interconnected hole, the rod to a temperature higher than or equal to a softening point of the thermoplastic resin.

11. A fastening device for fastening a plurality of workpieces in a fastening target group to one another, the fastening target group having an interconnected hole extending in a first direction, the device comprising:
a first mold;
a holder spaced from the first mold and facing the first mold in the first direction, the holder having a holding through-hole extending through the holder in the first direction;
a heater configured to heat an inside of the holding through-hole; and
an insertion jig insertable into the holding through-hole in the first direction from the holder toward the first mold.

12. The fastening device according to claim 11, wherein
the first mold has a recess recessed in the first direction from the holder toward the first mold.

13. The fastening device according to claim 12, wherein
the recess includes a protrusion in a center portion of the recess, and the protrusion protrudes in the first direction from the first mold toward the holder.

14. The fastening device according to claim 13, wherein
the protrusion includes a plurality of vertex portions arranged radially from a center of the recess when viewed in the first direction from the holder toward the first mold.

15. The fastening device according to claim 11, further comprising:
a second mold between the first mold and the holder in the first direction, the second mold being spaced from the first mold,
wherein the second mold has a molding through-hole extending through the second mold in the first direction.
